# EUROPEAN PATENT APPLICATION

(11) **EP 1 489 784 A1**
(43) Date of publication of application: **22.12.2004**
(21) Application number: 03291454.1
(22) Date of filing: 16.06.2003
(51) Int. Cl.: H04L 12/56

(54) **Restoration in an automatically switched optical transport network**

(71) Applicant: ALCATEL, 75008 Paris (FR)
(72) Inventor: Kasper, Jürgen, 70437 Stuttgart (DE)
(74) Representative: Rausch, Gabriele, Dr.

(57) **Abstract**

In a GMPLS-controlled transmission network, a method of restoring traffic after occurrence of a failure includes the steps of assigning a rank to each affected network element (NEa, NEb) based on locally available information; and sending restoration requests (R1, R2) between the network elements in the order of said ranks.

## Description

### Field of the Invention

The present invention relates to the field of telecommunications and more particularly to a method of restoring an automatically switched optical transport network (ASON).

### Background of the Invention

Transport networks serve for the physical layer transport of high bitrate tributary signals. In particular, the signals transmitted over a transport network are encoded and multiplexed into a continuous bit stream structured into frames of the same length. Within this constant bitrate bit stream, the frames repeat periodically with a frame repetition rate of typically 8 kHz and are structured according to a multiplexing hierarchy. An example of such a multiplexing hierarchy is SDH (Synchronous Digital Hierarchy, see ITU-T G.707 10/2000) where the frames are termed synchronous transport modules of size N (STM-N, where N=1, 4, 16, 64, or 256). The frames have a section overhead and contain at least one higher order multiplexing unit called virtual container VC-4. A VC-4 can either directly carry a tributary signal or a number of lower order multiplexing units like VC-1 2 or VC-3, which then carry tributary signals. Several multiplexing units can be concatenated to provide larger transport capacity.

Virtual containers are transmitted from source to sink through an SDH network and therefore represent a "logical" path through the network. The sequence of identical VCs having the same relative position in subsequent frames forms a traffic stream along that path. Each VC contains a path overhead (POH) and a payload section referred to as a container (C). The US equivalent of SDH is known as SONET (Synchronous Optical Network). Another well known transport network with similar multiplexing units is the recently defined Optical Transport Network OTN; see ITU-T G.709, 02/2001.

The transport network itself consists of a number of physically interconnected network elements such as crossconnects, add/drop multiplexers and terminal multiplexers. Traditional transport networks are managed centrally. This means that a central network manager has the overview about the topology and status of the network and if a customer desires a new connection for a tributary signal, the network operator manually establishes via his network management system a corresponding path through the transport network. Thus, paths through a centrally managed network are created under the control of the central network management system, which instructs all affected network elements (potentially using intermediate lower level network management facilities) to switch corresponding crossconnections to establish the new path.

A desire for a more flexible path provisioning has lead to the recent development of automatically switched optical transport networks (ASONs). This development has culminated in the definition of a new signaling protocol for optical networks which is known as GMPLS (Generalized Multi-Protocol Label Switching). The underlying principle is that each network element has its own GMPLS controller. The GMPLS controllers in the network communicate with each other over a dedicated data network, known as the control plane, to find an available route through the network, coordinate path set-up and configure their corresponding network elements accordingly to automatically establish a dynamically agreed path. Each GMPLS controller must therefore have a complete knowledge of the topology and status of its network domain and about gateway nodes to other domains. An OSPF protocol (Open Shortest Path First), slightly extended to the particular needs of a GMPLS-controlled transport network, is used to communicate (or "advertise") the status of the transport network from one GMPLS controller to the other. Each controller has a database where it stores the topology data of the network according to its latest knowledge.

A very basic aspect in all types of transport networks is availability and reliability of service. In other words, a transport network must be very robust against any kind of failure and the average outage time must be very low. Hence, a transport network needs to provide the means and facilities to ensure sufficient availability. Typically, network mechanisms which ensure this availability are distinguished in protection and restoration. The common principle of both is to redirect traffic of a failed physical link or logical path over a spare resource.

Protection is a mechanisms where an already established protection path or link is assigned to one selected high-priority path or link (known as 1 + 1 or 1:1 protection, depending on whether there is low priority extra traffic on the protection resource or not) or a group of n such selected paths or links (known as 1 :n protection). In the case of a failure, traffic can be protected very fast over the previously established protection resource under the sole control of the affected network elements in typically less than 50 ms. However, dual-ended protection requires a protocol between the affected nodes to signal and synchronize switch-over. Protection is a high-quality service restricted to few selected premium connections, which are typically charged at a higher price. Moreover, protection requires a high amount of spare resources compared with the amount of protected resources, i.e., 100 % of spare capacity in the case of 1 + 1 protection.

Restoration refers to a mechanism, where the network searches for restoration capacity and establishes a restoration path only after service path failure. Rather than calculating the restoration path after failure, pre-calculated restoration routes can be used instead but with the actual cross-connection to establish the path performed after failure. Restoration mechanisms are more stringent in the usage of spare capacity and however, providing a masking of the failure at a lower speed, typically in the range of a few seconds as completely new paths through the network must be established.

In an automatically switched optical transport network, restoration actions are distributed among the entire network. The GMPLS controllers of the affected network elements need to determine from their routing information possible alternate routes and negotiate path set-up with the counterpart controllers along that path.

After a severe failure in the network, e.g. in the case of a node failure, i.e., a complete node is going down, all effected paths in the domain will be rerouted/restored. Due to the decentralized, asynchronous behavior of the rerouting in every node, contentions and rejections of the rerouting requests may occur. This non-deterministic behavior will lead to longer recovery times in a network domain.

### Summary of the Invention

It is therefore an object of the present invention to provide a method and corresponding network element controller which allows path rerouting with more deterministic behavior in the case of a serious failure.

These and other objects that appear below are achieved by assigning to each network element a rank based on locally available information such as for example the IP address of its controller or the service priority of the failed traffic. This introduces an order in which the network elements send their requests for updating routing information and set-up of restoration paths. The network element controllers detect a serious failure and determine from their routing information all other network elements affected by this failure. The affected network elements are then ranked according to their ranks. The controllers of the affected network elements monitor control messages to determine which higher ranked network elements have already requested restoration paths and send restoration requests only after all higher ranked network elements have finished their restoration actions.

This results in a deterministic restoration behavior according to a prioritization in the domain. Average rerouting time is shorter because less contentions and rejections of rerouting requests can occur in the network domain.

### Brief Description of the Drawings

A preferred embodiment of the present invention will now be described with reference to the accompanying drawings in which
- figure 1: shows an example network topology;
- figure 2: shows colliding requests between two network element controllers communicating to establish a restoration path; and
- figure 3: shows collision free communication between the controllers of figure 2 according to the invention.

### Detailed Description of the Invention

GMPLS (Generalized Multi-Protocol Label Switching) in transmission networks refers to a protocol for distributed management and path set-up. Each GMPLS network element has its own controller and these GMPLS controllers communicate with each other to exchange routing information, determine possible routes for a new path and request path set-up.

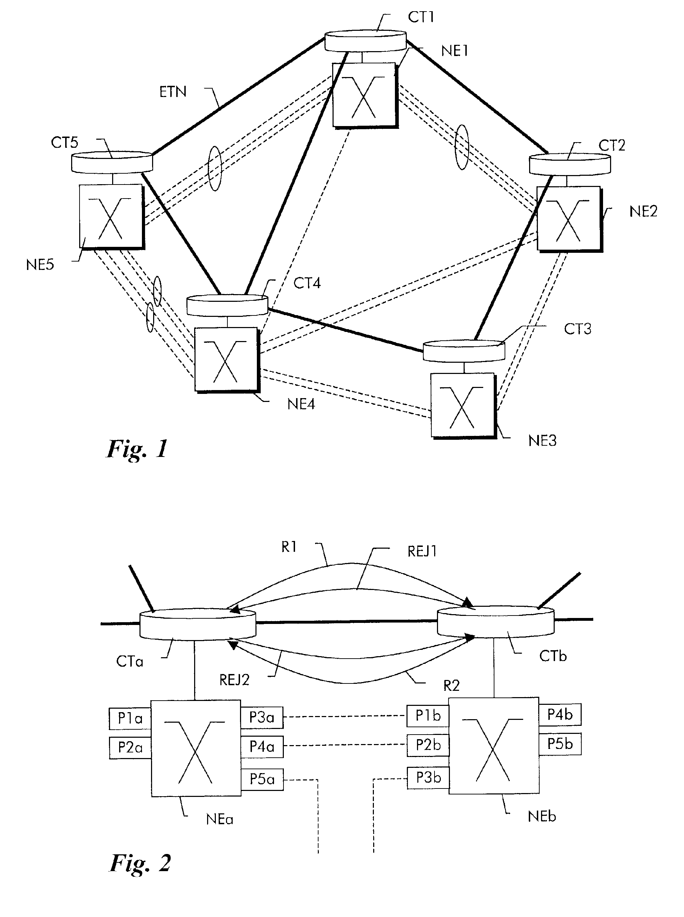

The above explained principle of a GMPLS-controlled transport network will be described in more detail with reference to figure 1, which shows an example network composed of five network elements NE1-NE5, which are physically connected with each other using one or more optical fiber links. Each optical fiber link is shown as a dotted line. Fibers may also be bundled, which is indicated by circles around fibers belonging to the same bundle of fibers. For example NE1 is connected to NE2 to NE2 by three fibers forming a single bundle and to NE3 via three fibers forming one bundle and to NE4 via a single fiber. NE2 is additionally connected to NE3 and NE4 via two fibers, each, NE3 is connected to NE4 via two fibers, and NE5 is connected to NE4 via four fibers arranged in two bundles.

Depending on the type of fiber used and the interfaces of the network elements connecting to the fibers, each fiber can carry one STM-N signal of a certain type. For the sake of simplicity but without loss of generality, it is assumed that each fiber carries an STM-1 6 signal, i.e., a framed transmission signal with a capacity of 16 multiplexing units VC-4. A path through the transmission network is represented by a particular VC-4. For instance, NE5 can creates a VC-4 destined for a user connected to NE2. NE4 and NE3 switch this particular VC-4 through unchanged, so that the VC-4 reaches NE2 via NE4 and NE3. A path exists thus between NE5 and NE2 leading over NE4 and NE3. Obviously, many alternative routes through the example network would exists for an alternate path between NE5 and NE2. The event of switching a VC-4 unchanged from input to output in NE4 or NE3 is referred to as a crossconnection. Instead of the term path, one speaks also about a logical connection or only about a connection in this context.

In a transport network, such paths or connections are semi-permanent, which means that these are not created only temporarily for the duration of a single telephone call or only for the duration of a single packet such as in packet switched networks, but exist for a certain period of time and remain valid for all subsequent multiplexing units belonging to the same traffic stream until such path is actively removed again.

Path set-up is achieved in transport networks through the control plane of the network. In traditional centrally managed networks, the control plane is implemented into a central management system while in a GMPLS-controlled network, the control plane is distributed across the network. The latter case is shown in figure 1. Each network element NE1-NE5 is assigned a GMPLS controller CT1 -CT5. The controllers are interconnected by the control plane, a dedicated data network, i.e., an Ethernet ETN shown as bold lines between the controllers in figure 1. The Ethernet ETN is independent of the underlying transport network. Some connections in the Ethernet may use the data communication channel (DCC) available for this purpose in the overhead of transmission signals on the transport network. However, some other connections may lead via dedicated copper wires between the controllers. The topology of the Ethernet may be the same or similar as the topology of the transport network but may also be totally different. It should be understood, however, that the data network used to control the transport network is completely independent of the latter in the sense that changes in the configuration of the transport network by the control plane would not affect the data network at all.

Each controller has knowledge about the topology and status (e.g., the available bandwidth of each link) of the network domain, which information is stored in a local database of the respective controller. In order to establish the path of the example above, controller CT5 assigned to network element NE5 determines from its database an idle route via NE4 and NE3 to NE2 and sends appropriate GMPLS requests via the Ethernet ETN to the corresponding controllers CT4, CT3, and CT2 to switch local crossconnections for the path to be established.

In the case of a failure in the network, a node that looses an existing connection will try to set up a new connection to its far-end counterpart node. Conversely, the far-end node may also detect the loss of signal at the failed connection and try itself to establish a new connection to the first node. This may lead to the situation shown in figure 2, in which two connected nodes NEa and NEb are trying to establish the same connection at the same time.

In particular, node NEa has interfaces P1a-P5a and node NEb has interfaces P1 b-P5b. Node NEa has a GMPLS controller CTa and node NEb has a GMPLS controller CTb. Node NEa is connected to node NEB via a first link from interface P3a to interface P1b and via a second link between interface P4a and P2b. Thus, in the case a bi-directional connection needs to be established between NEa and NEb, this could be done via either the first or the second link. In figure 2, however, both nodes are trying to set up a connection over the same link at the same time. In particular, CTa sends a connection request R1 to CTb requesting a connection via the first link between P3a and P1b. As long as the request is valid and not either executed or rejected, the available capacity from that link is blocked so that it cannot be re-used for any other purpose. At the same time, CTb sends a connection request R2 to CTa also requesting a connection over the first link. As CTa has temporarily blocked the idle capacity for its request R1, it rejects request R2 and send a rejection REJ2 back to CTb. CTb in turn rejects for the same reason request R1 and sends a rejection REJ1 to CTa. As a consequence, both requests cannot be executed and the connection set-up is thus delayed.

The invention recognizes the need for a more deterministic re-routing behavior and introduces an order in which the network nodes send connection requests for a failed connection.

For this purpose, use is made of the fact that each network element has the complete routing information locally available. Moreover, the invention is based on the fact that each network element can listen to all control traffic on the data network used to control the transport network. The invention uses thus the locally available information to introduce a unique ranking of all affected network elements and uses the open control traffic in each network element to wait its turn.

In a first embodiment, the locally available information used to determine the unique ranking is the IP address of the GMPLS controllers. In general, each GMPLS controller has a unique IP address in the control plane. In the case of a severe failure, the affected network nodes determine from their routing information which other network nodes are affected by the failure and rank these network nodes according to their IP address. The network node with the highest address for example starts sending connection requests to re-route the traffic from the failed links. As all other network nodes can listen to the requests and control messages exchanged over the data network, they are able to observe when the highest ranked node has finished its restoration actions. Then the next lower ranked node knows that it is his turn to continue restoration and it will send the appropriate connection requests. This procedure will continue until all affected network nodes have restored all failed paths in the network or no restoration capacity is available anymore.

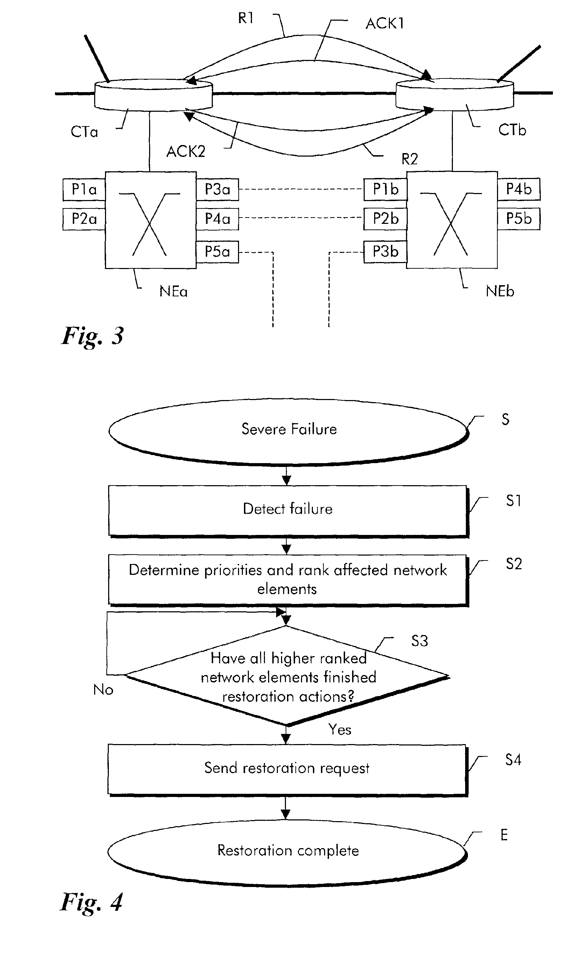

Figure 3 shows these restoration steps between the network elements from figure 2. It is assumed that network node NEa has the higher and NEb the lower IP address value. Therefore NEa starts with restoration and sends from its GMPLS controller CTa a request R1 to the controller CTb of NEb with the purpose to establish a restoration path over the link between ports P3a and P1b. CTb confirms the request with acknowledgment ACK1 and both controllers control their network nodes to switch the corresponding crossconnection to establish the requested and confirmed connection. Then NEa has finished its restoration and NEb continues by sending restoration request R2 to establish a restoration path over the link between ports P2b and P4a, which is confirmed by CTa with acknowledgment ACK2.

As can be seen from this very simple example, due to the deterministic order in which the network nodes perform restoration, no conflicting requests and consequent rejections will occur anymore.

As an alternative to the IP address based ranking, the service priority of the failed service can instead be used. Traffic streams may have different classes of service, for example any priority class between 1 to 4. In other words, each path through the network is assigned a certain service level or priority class. These predefined priority classes may be used to rank the failed traffic in the order it has to be restored. In other words, the network nodes determine which paths require restoration due to a severe failure and perform restoration actions in the order of the priority class. If this criterion does not result in a unambiguous order, other additional criteria such as the IP address above can be used to make the ranking unambiguous.

As an improvement to the service level based ranking, each service may be assigned a unique connection identifier whereby the service priority is identified by this connection identifier. The service level identification od each service can be stored in a local routing engine of each domain network element or in a centralized database. All decentralized routing engines in the domain will exchange the topology information and the service level information for each path.

Figure 4 shows a flow chart of the restoration procedure using service priorities. The procedure starts (S) when a severe failure occurs in the network. An affected network nodes detect in step S1 the failure. Then, the node determines in step S2 the service priorities of the failed paths and rank the network nodes that have to perform the restoration of these paths according to the priority of the failed traffic. In step S3, the node then listens to the requests and control commands on the data network and waits until all higher ranked network nodes have finished their restoration actions. Then, the node sends in step S4 its restoration request. If all affected nodes have performed their restoration steps, restoration is complete and procedure ends (E).

It may occasionally happen that a network node waits in error for restoration actions from a higher ranked network node but which have already been completed or are not required at all. To resolve such a situation, the waiting network node may start a timer upon lapse of which the outstanding restoration actions are deemed to be performed. In other words, a network node waits either until the next higher ranked network node has finished restoration actions or until the internal timer has lapsed.

The invention is not restricted to SDH-type networks as described in the preferred embodiment but would be applicable to any type of transport network (i.e., 2Mbit/s or 34Mbit/s services) with distributed control plane.

## Claims

1. A method of restoring traffic in a GMPLS-controlled transmission network after occurrence of a failure, the transmission network comprising a number of network elements (NE1-NE5), each having a GMPLS controller (CT1-CT5); the GMPLS controllers being interconnected by a dedicated data network (ETN), said method comprising the steps of assigning a rank to each affected network element (NEa, NEb) based on locally available information; and sending restoration requests (R1, R2) between the network elements in the order of said ranks.

2. A method according to claim 1, wherein said information is either the IP address or service priorities of failed traffic streams.

3. A method according to claim 1, wherein an affected network element determines which other network elements are affected by the failure, ranks all affected network elements according to said locally available information and waits until all higher-ranked network elements have finished restoration.

4. A method according to claim 3, wherein said affected network element listens to control messages exchanged on the data network (ETN) when it is waiting.

5. A method according to claim 3, wherein a waiting network element starts a timer and, if a higher ranked network element does not finish its restoration actions, continues restoration after said timer has lapsed.

6. A network element (NEa, NEb) for a GMPLS-controlled transmission network, said network element comprising a GMPLS controller (CTa, CTb) connectable to a dedicated data network (ETN); said controller (CTa, CTb) being adapted and programmed to determine in the case of a failure which other network elements in the transmission network are affected by the failure, to rank all affected network elements according to locally available information, to wait until all higher-ranked network elements have finished restoration and to send restoration requests (R1, R2) only after all higher-ranked network elements have finished restoration.
